# EUROPÄISCHE PATENTSCHRIFT

(11) **EP 4 031 755 B1**
(45) Veröffentlichungstag und Bekanntmachung des Hinweises auf die Patenterteilung: **08.05.2024**
(21) Anmeldenummer: 20772224.0
(22) Anmeldetag: 04.09.2020
(51) Int. Cl.: F01P 3/20, B60K 6/26, B60L 58/26, H02K 9/19

(54) **THERMOMANAGEMENTSYSTEM UND FAHRZEUG**
THERMAL MANAGEMENT SYSTEM AND VEHICLE
SYSTÈME DE GESTION THERMIQUE ET VÉHICULE

(30) Priorität: 16.09.2019 DE 102019214082
(43) Veröffentlichungstag der Anmeldung: 27.07.2022
(73) Patentinhaber: Vitesco Technologies GmbH, 93055 Regensburg (DE)
(72) Erfinder: ESER, Gerhard, 81737 München (DE); BRETTNER, Sebastian, 81737 München (DE); DILLINGER, Manuel, 81737 München (DE); FEULNER, Markus, 81737 München (DE); ZHANG, Hong, 81737 München (DE)
(74) Vertreter: Vitesco Technologies
(86) Internationale Anmeldenummer: PCT/EP2020/074848
(87) Internationale Veröffentlichungsnummer: WO 2021/052788

(56) Entgegenhaltungen:
- EP-B1- 2 392 486
- DE-A1-102012 108 043
- DE-A1-102015 122 196
- JP-A- 2017 114 298
- JP-A- 2019 116 128
- US-A1- 2010 295 391
- US-B1- 6 323 613

## Beschreibung

Die Erfindung betrifft ein Thermomanagementsystem für ein Fahrzeug. Die Erfindung betrifft ferner ein Fahrzeug mit einem solchen Thermomanagementsystem.

Unter einem Fahrzeug ist dabei jede Art von Fahrzeug zu verstehen, welches eine zu temperierende Batterie sowie einen zu temperierenden Elektromotor bzw. E-Motor zum Antrieb des Fahrzeugs umfasst. Die Batterie kann dabei luftgekühlt und/oder kühlmittel- bzw. kühlflüssigkeits- bzw. wassergekühlt sein. Der E-Motor hingegen ist dabei kühlmittel- bzw. kühlflüssigkeits- bzw. wassergekühlt. Dabei kann es sich um ein teilelektrisches oder vollelektrisches Fahrzeug handeln, insbesondere aber um Personenkraftwagen und/oder Nutzfahrzeuge.

Aus der EP 2392486 B1 ist ein Thermomanagementsystem bekannt, welches einen ersten Kühlmittelkreis zur Temperierung einer Batterie und einen zweiten Kühlmittelkreis zur Temperierung eines Elektromotors und einer Leistungselektronik aufweist.

Aus der US 6323613 B1 und der US 2010295391 A1 ist je ein Kühlsystem einer elektrischen Antriebseinheit eines Fahrzeugs bekannt.

Eine der Erfindung zugrunde liegende Aufgabe ist es, ein solches Thermomanagementsystem zu verbessern.

Diese Aufgabe wird durch ein gemäß Anspruch 1 unter Schutz gestelltes Thermomanagementsystem gelöst. Es wird ferner ein Fahrzeug mit einem solchen Thermomanagementsystem vorgeschlagen und unter Schutz gestellt (vgl. Anspruch 8). Vorteilhafte Ausführungsformen der Erfindung sind Gegenstand der Unteransprüche.

Es wird ein Thermomanagementsystem für ein Fahrzeug vorgeschlagen, wobei das Thermomanagementsystem einen ersten Kühlmittelkreis für eine Batterie und einen zweiten Kühlmittelkreis für einen E-Motor zum Antrieb des Fahrzeugs umfasst.

Die beiden Kühlmittelkreisläufe sind dabei mittels eines Mehrwegeventils in einem ersten Modus des Systems und in einer ersten Ventilstellung des Mehrwegeventils in Reihe zueinander oder in einem zweiten Modus des Systems und in einer zweiten Ventilstellung des Mehrwegeventils parallel zueinander betreibbar.

Es wird dabei vorgeschlagen, die beiden Kühlmittelkreisläufe alternativ auch in einem dritten Modus des Systems und in einer dritten Ventilstellung des Mehrwegeventils zu betreiben, in welcher das Mehrwegeventil eine Zwischenstellung einnimmt, in welcher sich die Kühlflüssigkeitsströme der beiden Kühlmittelkreisläufe miteinander bedarfsgerecht vermischen.

Bei einer solch bedarfsgerechten Vermischung lässt sich eine Abwärme bzw. Verlustwärme des E-Motorkühlmittelkreises vorteilhafterweise an den Batteriekühlmittelkreis abführen, ohne dabei ein sprunghaftes Übergangsverhalten des Systems zu erfahren, welches sich als solches beim Umschalten zwischen dem Reihenschaltungsmodus und dem Parallelschaltungsmodus einstellt und sich in Form von sprunghaften Temperatur- und Druckänderungen äußert. Zudem lassen sich bei instationären Fahrten, bei denen sich der E-Motor schnell aufheizt, häufige Umschaltungen zwischen dem Reihenschaltungsmodus und dem Parallelschaltungsmodus vermeiden. Eine solch bedarfsgerechte Vermischung verbessert demnach eine Temperaturregelung von sowohl dem E-Motorkühlmittelkreis als auch dem Batteriekühlmittelkreis.

Das Thermomanagementsystem umfasst dabei ferner einen Ölkühlkreis zur zusätzlichen Kühlung des E-Motors, wobei der Ölkühlkreis über einen Wärmetauscher, etwa in Gestalt eines Plattenwärmetauschers, an den zweiten Kühlmittelkreis thermisch angebunden ist.

Ein Öl kühlt dabei den E-Motor zusätzlich zur Kühlflüssigkeit des E-Motorkühlmittelkreises, indem es die Abwärme des Stators und Rotors des E-Motors aufnimmt und über den Wärmetauscher dem E-Motorkühlmittelkreis zuführt. Das Öl schmiert dabei zugleich die Lagerstellen einer Rotorwelle.

Unter einer solchen Kühlflüssigkeit ist dabei eine Mischung von Wasser mit einem Kühlzusatzmittel zu verstehen. Die Kühlflüssigkeit hat nicht nur die Aufgabe, Abwärme aufzunehmen und zu transportieren. Das Kühlzusatzmittel soll dabei das Wasser vor dem Durchfrieren schützen, die beiden Kühlmittelkreise vor Korrosion schützen, die beweglichen Teile in den beiden Kühlmittelkreisen schmieren sowie Kunststoff- oder Gummielemente in den beiden Kühlmittelkreisen vor Auflösung schützen.

In einer weiteren Ausführung ist der Wärmetauscher fluidisch parallel zum kühlflüssigkeitsgekühlten Stator des E-Motors angeordnet. Dabei kann eine erste Zuleitung von einem Knotenpunkt des zweiten Kühlmittelkreises stromaufwärts des Stators zum Wärmetauscher führen und eine zweite Zuleitung vom Wärmetauscher zu einem Knotenpunkt des zweiten Kühlmittelkreises stromabwärts des Stators.

In einer weiteren Ausführung weist der Ölkühlkreis ein Überwachungssystem mit mindestens einem Drucksensor zur Überwachung eines mittels einer Ölpumpe erzeugten Ölflusses auf.

Das Überwachungssystem kann dabei ferner einen Drehzahlsensor aufweisen, welcher an der Ölpumpe angeordnet und mit welchem ein geförderter Volumen- und Massenstrom ermittelbar ist.

In einer weiteren Ausführung weist das Überwachungssystem einen zusätzlichen Drucksensor auf. Dabei kann auch der besagte Drehzahlsensor vorgesehen sein.

Dabei kann der mindestens eine Drucksensor bzw. können die beiden Drucksensoren stromaufwärts des Wärmetauschers und stromabwärts der Ölpumpe angeordnet sein.

Durch diese vorgeschlagene Sensor-Redundanz lassen sich die erfassten Drücke bzw. Druckmesswerte plausibilisieren bzw. auf Plausibilität überprüfen.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen:
- Fig. 1: ein Thermomanagementsystem in einer vorgeschlagenen ersten Ausgestaltung, (ohne den Ölkühlkreis dargestellt)
- Fig. 2: das in Fig. 1 gezeigte Thermomanagementsystem in Verbindung mit einem Ölkühlkreis in einer ersten Ausgestaltung,
- Fig. 3: das in Fig. 1 gezeigte Thermomanagementsystem in Verbindung mit einem Ölkühlkreis in einer zweiten Ausgestaltung,
- Fig. 4: das in Fig. 1 gezeigte Thermomanagementsystem in Verbindung mit einem Ölkühlkreis in einer dritten Ausgestaltung,
- Fig. 5: Öl-Druckverläufe korrespondierend zu verschiedenen Phasen des Ölkühlkreises,
- Fig. 6: ein erstes Flussdiagramm korrespondierend zu einer vorgeschlagenen Überwachung des Ölkühlkreises in einer Druckaufbauphase,
- Fig. 7: ein zweites Flussdiagramm korrespondierend zu einer vorgeschlagenen Überwachung des Ölkühlkreises in einer Betriebsphase sowie
- Fig. 8: ein drittes Flussdiagramm korrespondierend zu einer vorgeschlagenen Überwachung des Ölkühlkreises in einer Druckabbauphase.

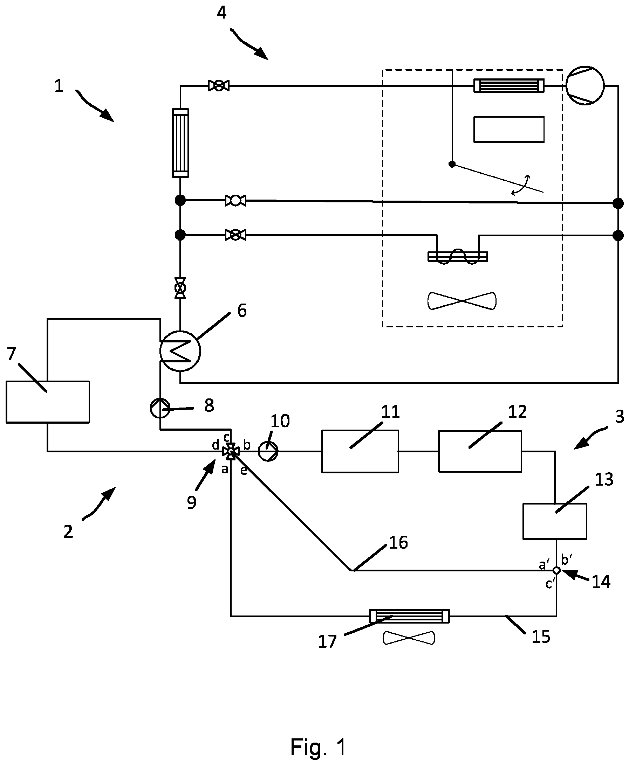

Das Thermomanagementsystem 1 eines Fahrzeugs nach Fig. 1 veranschaulicht einen ersten Kühlmittelkreis 2 für eine Batterie 7 und einen zweiten Kühlmittelkreis 3 für einen E-Motor 13 zum Antrieb des Fahrzeugs, sowie einen Kältemittelkreis 4 einer Klimaanlage, auf den aber im Folgenden nicht näher eingegangen wird. Bei dem Fahrzeug kann es sich dabei um ein batterieelektrisches Fahrzeug (Battery Electric Vehicle, kurz: BEV), ein Hybridelektrokraftfahrzeug (Hybrid Electric Vehicle, kurz: HEV) oder ein Brennstoffzellenfahrzeug (Fuel Cell Electric Vehicle, kurz: FCEV) handeln. Diese drei Kühlkreise 2, 3, 4 verschmelzen dabei gewissermaßen miteinander. In den beiden Kühlmittelkreisen 2, 3 wird die jeweilige Kühlflüssigkeit mittels einer eigenen elektrischen Pumpe 8, 10 gefördert.

Unter einer solchen Kühlflüssigkeit ist dabei eine Mischung von Wasser mit einem Kühlzusatzmittel zu verstehen. Die Kühlflüssigkeit hat dabei nicht nur die Aufgabe, Abwärme aufzunehmen und zu transportieren. Das Kühlzusatzmittel soll dabei das Wasser vor dem Durchfrieren schützen, die beiden Kühlmittelkreise vor Korrosion schützen, die beweglichen Teile in den beiden Kühlmittelkreisen schmieren sowie Kunststoff- und/oder Gummielemente in den beiden Kühlmittelkreisen vor Auflösung schützen.

Der E-Motor 13 und eine Leistungselektronik 12 sollen bei einer Kühlflüssigkeits- bzw. Kühlwassertemperatur von ca. 80 bis maximal 85°C betrieben werden. Dabei hat die Kühlflüssigkeit am Eingang in die Leistungselektronik 12 eine Temperatur von etwa 55°C und am Eingang in den E-Motor 13 eine Temperatur von etwa 65°C. Am Ausgang des E-Motors 13 hat die Kühlflüssigkeit dann eine Temperatur von ca. 80 bis maximal 85 °C.

Die Batterie 7 bzw. die Batteriezellen hingegen sollen in einem Kühlflüssigkeits- bzw. Kühlwassertemperaturfenster zwischen ca. 20 °C und ca. 40 °C betrieben werden, denn dies stellt einen optimalen Betriebstemperaturbereich der Batterie 7 sicher. Die Temperatur der Batterie 7 bzw. der einzelnen Batteriezellen selbst kann dabei die Temperaturschwelle von ca. 40°C durchaus überschreiten. Beide Kühlmittelkreise 2, 3 müssen Wärme sowohl aufnehmen als auch abgeben können.

Während der Batteriekühlmittelkreis 2 über einen Wärmetauscher 6 (auch Chiller genannt; vgl. Fig. 1) gegenüber dem Kältemittelkreis 4 entwärmt wird, kann der E-Motorkühlmittelkreis 3 über einen Radiator bzw. Kühler 17 gegenüber der Umgebung entwärmt werden sowie gegenüber dem Batteriekühlmittelkreis 2 über ein im Folgenden beschriebenes Mehrwegeventil 9 (auch Coolant Flow Control Valve genannt, kurz: CFCV), wobei das Mehrwegeventil 9 eine Schnittstelle zwischen dem Batteriekühlmittelkreis 2 und dem E-Motorkühlmittelkreis 3 darstellt und welches dazu eine entsprechende Ventilstellung einnimmt, so dass sich die Kühlflüssigkeitsströme der beiden Kühlmittelkreise 2, 3 miteinander bedarfsgerecht vermischen können.

Die Entwärmung des Batteriekühlmittelkreises 2 kann auch bei einer entsprechenden Ventilstellung des Mehrwegeventils 9 über den Radiator bzw. Kühler 17 erfolgen. Da aber die Batteriekühlflüssigkeit eine Temperatur von 40 °C nicht überschreiten soll, reicht meist die Entwärmung über den Radiator 17 nicht aus, so dass Wärme über den Wärmtauscher 6 abgeführt werden muss. Im E-Motorkühlmittelkreis 3 ist neben dem E-Motor 13 und der Leistungselektronik 12 auch noch ein Ladegerät 11 (auch Charger genannt) zu kühlen. Zur Regelung der Kühlmittelkreise 2, 3 ist je ein - nicht dargestellter - Temperatursensor vorgesehen. Im Batteriekühlmittelkreis 2 ist ferner ein - nicht dargestellter - Widerstandsheizer vorgesehen, um kurzfristig elektrisch Wärme zuführen zu können.

Mittels des Mehrwegeventils 9 lässt sich das Thermomanagementsystem 1 in unterschiedlichen Modi betreiben. Das Mehrwegeventil 9 ist dabei Teil einer sog. Aktuatoreinheit - auch Kühlwasserventileinheit, Kühlwassersteuerventileinheit oder Kühlwasserregelventileinheit genannt -, die als solche auch eine Antriebseinheit mit einem Elektrostellmotor sowie eine Steuereinheit zur Steuerung des Elektrostellmotors umfasst.

In Sachen dieser Modi wird der Vollständigkeit halber auf die deutsche Patentanmeldung mit dem Aktenzeichen 10 2019 210 577.7 verwiesen, die darauf detailliert eingeht.

In einem ersten Modus des Systems (Use Case 1, kurz: UC1 = Reihenschaltung R mit maximaler Wärmerückgewinnung) und in einer ersten Ventilstellung des Mehrwegeventils 9 lässt sich der Kühlmittelkreis 2 in Reihe zum Kühlmittelkreis 3 schalten. Dabei strömt bezüglich des Mehrwegeventils 9 Kühlflüssigkeit über einen Zufluss bzw. Eingang a und einen Abfluss bzw. Ausgang c vom Kühlmittelkreis 3 in den Kühlmittelkreis 2 und schließlich über einen Zufluss bzw. Eingang d und einen Abfluss bzw. Ausgang b vom Kühlmittelkreis 2 zurück in den Kühlmittelkreis 3.

Diese Reihenschaltung bewirkt eine schnelle Erwärmung des Batteriekühlmittelkreises 2 unter Ausnutzung der Abwärme des E-Motors 13 sowie der Leistungselektronik 12. Der E-Motorkühlmittelkreis 3 hat somit auch die Funktion eines Heizkreises.

In einem zweiten Modus des Systems (Use Case 2, kurz: UC2 = Parallelschaltung P mit Überhitzungsschutz) und in einer zweiten Ventilstellung des Mehrwegeventils 9 lässt sich der Kühlmittelkreis 2 parallel zum Kühlmittelkreis 3 schalten, so dass die beiden Kühlmittelkreise 2, 3 fluidisch voneinander getrennt sind. Diese Trennung schützt die Batterie 7 vor einer Überhitzung.

Darüber hinaus wird auch ein dritter Modus des Systems (Use Case 3, kurz: UC3 = Mischmodus M mit selektiver Wärmerückgewinnung) vorgeschlagen, in welchem das Mehrwegeventil 9 in eine Zwischenstellung - d.h. eine dritte Ventilstellung - geschaltet ist, in welcher sich die Kühlflüssigkeitsströme der beiden Kühlmittelkreise 2, 3 miteinander bedarfsweise vermischen.

Durch einen solchen Mischmodus lässt sich sowohl die Kühlflüssigkeitstemperatur des Batteriekühlmittelkreises 2 als auch die Kühlflüssigkeitstemperatur des E-Motorkühlmittelkreises 13 genauer regeln. Es unterbleiben dabei vorteilhafterweise hohe Druck- und Temperatursprünge in den beiden Kühlmittelkreisen 2, 3, da ein häufiges Umschalten zwischen dem Reihenschaltungsmodus R und dem Parallelschaltungsmodus P unterbleibt.

In der hier vorgeschlagenen Ausführung (vgl. z.B. Fig. 1) ist das Mehrwegeventil 9 in Gestalt eines 5/3-Wegeventils ausgebildet. Dabei muss man sich auch einen aus der Ebene der Fig. 1 herausragenden Zufluss bzw. Eingang e des 5/3-Wegeventils vorstellen, der als solcher über einen Bypass-Pfad 16 mit einem Knotenpunkt 14 (bzw. dessen Abfluss a^{I}) stromabwärts des E-Motors 13 fluidisch verbunden ist, wobei dem Knotenpunkt 14 sowohl der Bypass-Pfad 16 als auch ein dazu paralleler Pfad 15 mit einem Radiator 17 entspringt. Der Radiatorpfad 15 verbindet den Knotenpunkt 14 (bzw. dessen Abfluss c^{I}) fluidisch mit dem Zufluss bzw. Eingang a des 5/3-Wegeventils.

Anstelle des besagten 5/3-Wegeventils ließe sich auch ein Mehrwegeventil in Gestalt eines 4/2-Wegeventils verwenden, über welches sich die zuvor beschriebenen Systemmodi und Ventilstellungen ebenfalls einstellen bzw. ansteuern lassen. Dabei ist im Kühlmittelkreis 3 stromabwärts des E-Motors 13 - anstelle des zuvor genannten Knotenpunktes - ein weiteres Mehrwegeventil in Gestalt eines 3/2-Wegeventils vorzusehen, welches mit dem Zufluss bzw. Eingang a des 4/2-Wegeventils fluidisch verbunden ist.

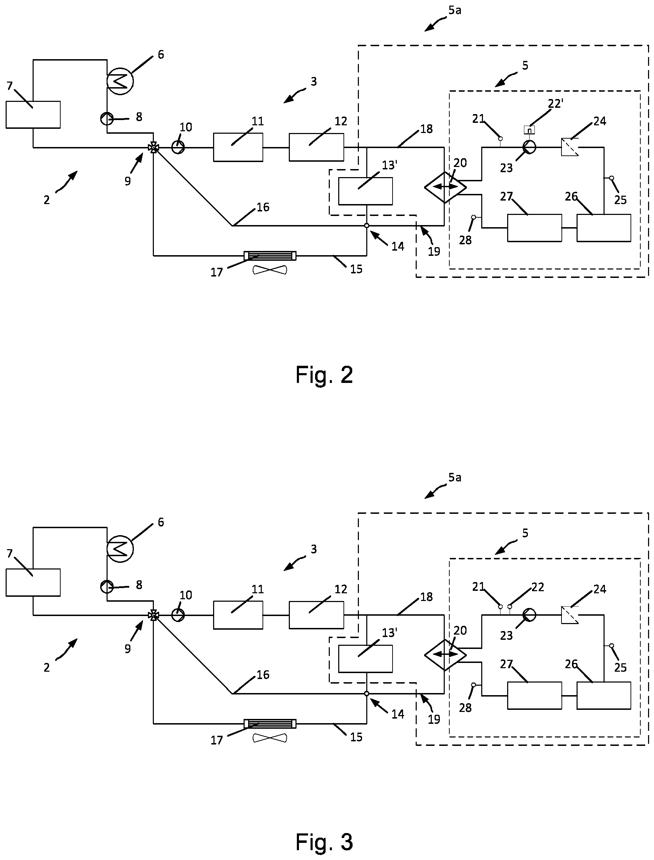

Das Thermomanagementsystem 1 umfasst ferner ein Ölkühlsystem 5a mit einem Ölkühlkreis 5 (vgl. Fig. 2, Fig. 3, Fig. 4) zur zusätzlichen Kühlung des E-Motors 13. Der Ölkühlkreis 5 ist dabei mittels eines Wärmetauschers 20 an den Kühlmittelkreis 3 thermisch angebunden. Der Ölkühlkreis 5 umfasst neben einem Teil des Wärmetauschers 20 den Rotor 27 des E-Motors 13 sowie ein Getriebe bzw. Untersetzungs- und/oder Übersetzungsgetriebe 26, z.B. in Gestalt eines dreistufigen Getriebes, welches mit dem E-Motor 13 (bzw. Stator 13^{I} und Rotor 27), eine E-Motor-Getriebe-Antriebseinheit bildet. Der Ölkühlkreis 5 umfasst ferner eine Ölpumpe 23, einen der Ölpumpe 23 fluidisch vorgeschalteten Ölfilter 24 sowie zwei Temperatursensoren 25, 28 (vgl. Fig. 2, Fig. 3, Fig. 4).

Der Stator 13^{I} des E-Motors 13 hingegen ist vom Kühlmittelkreis 3 umfasst, d.h., dass der Stator 13^{I} kühlflüssigkeits- bzw. wassergekühlt ist.

Über den Wärmetauscher 20 wird die vom Ölkühlkreis 5 aufgenommene Abwärme des E-Motors 13 - bzw. Stators 13^{I} und Rotors 27 - dem Kühlmittelkreis 3 zugeführt. Dabei ist der Wärmetauscher 20 fluidisch parallel zum kühlflüssigkeits- bzw. wassergekühlten Stator 13^{I} angeordnet.

Eine erste Zuleitung 18 führt dabei von einem Knotenpunkt des Kühlmittelkreises 3 stromaufwärts des Stators 13^{I} zum Wärmetauscher 20 und eine zweite Zuleitung 19 vom Wärmetauscher 20 zum besagten Knotenpunkt 14 stromabwärts des Stators 13^{I}.

Durch eine Welle des Rotors 27 wird ein Öl, welches auch zur Schmierung und Kühlung des Getriebes 26 verwendet wird, bis zu mindestens einer Austrittsstelle des Rotors 27 gefördert. Von dieser Austrittsstelle wird das Öl fliehkraftbedingt gegen die Wicklungen des Stators 13^{I} geschleudert, wobei sich das Öl über den Rotor 27 verteilt und dabei auch bis zu den beiden Lagerstellen der Rotorwelle gelangt. Das Öl fließt schließlich bis in eine Ölwanne, die am Stator 13^{I} angebracht ist und von der es aufgenommen wird. Die Ölpumpe 23 saugt das Öl aus der Ölwanne an und fördert es.

Das Öl kühlt dabei den E-Motor 13 zusätzlich zur Kühlflüssigkeit des E-Motorkühlmittelkreises, indem es die Abwärme des Stators 13^{I} und des Rotors 27 aufnimmt, und schmiert zugleich die besagten Lagerstellen der Rotorwelle.

Der Ölkühlkreis 5 umfasst zudem ein Überwachungssystem zur Überwachung des Ölflusses. Das Überwachungssystem umfasst dabei vorzugsweise stromaufwärts des Wärmetauschers 20 und stromabwärts der Ölpumpe 23 einen Drucksensor 21. In einer ersten Ausführungsform umfasst das Überwachungssystem ferner einen Drehzahlsensor 22^{I}, welcher an der Ölpumpe 23 zur Erfassung einer Pumpendrehzahl angeordnet ist (vgl. Fig. 2). In einer zweiten Ausführungsform wird anstelle des Drehzahlsensors 22^{I} vorteilhafterweise ein zusätzlicher Drucksensor 22 vorgeschlagen, um mittels erfasster Drücke Druckdifferenzen ermitteln zu können. Durch die Verwendung der beiden Drucksensoren 21, 22 lassen sich die Kosten eines solchen Überwachungssystems signifikant reduzieren. Dabei wird vorgeschlagen, die beiden Drucksensoren 21, 22 vorzugsweise stromaufwärts des Wärmetauschers 20 und stromabwärts der Ölpumpe 23 anzuordnen. In Fig. 3 sind die beiden Drucksensoren 21, 22 im Unterschied zur Fig. 2 integraler Bestandteil eines Sensormoduls 20a.

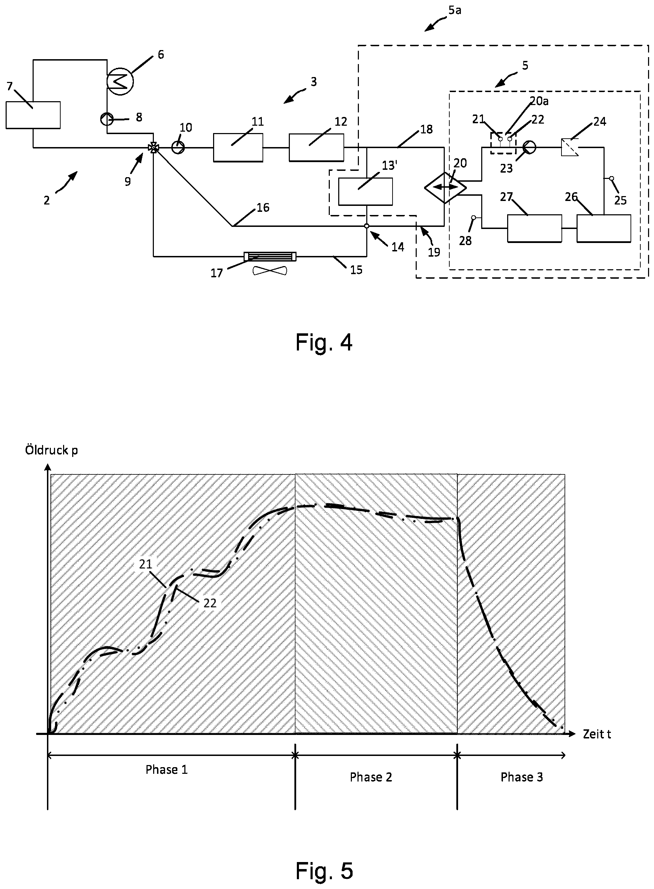

Fig. 5 veranschaulicht mittels der beiden Drucksensoren 21, 22 erfasste Druckverläufe korrespondierend zum Ölfluss im Ölkühlkreis 5 in drei aufeinanderfolgenden Phasen, und zwar:
- in einer Druckaufbauphase (Phase I),
- in einer Betriebsphase (Phase II), welche auf die Druckaufbauphase folgt, und
- in einer Druckabbauphase (Phase III), welche auf die Betriebsphase folgt.

Zur Überwachung des Ölflusses werden dabei bezüglich der einzelnen Phasen I bis III Druck-Differenzwerte zwischen den beiden Druckverläufen ermittelt. Diese Druck-Differenzwerte werden dann mit einem vorgebbaren und phasenbezogenen Vergleichswert - auch Schwellwert bzw. Referenzwert genannt - für die Druck-Differenz verglichen, um auf einen Fehler zu überprüfen, wobei bei einer Überschreitung des Vergleichswertes auf einen Fehler erkannt wird.

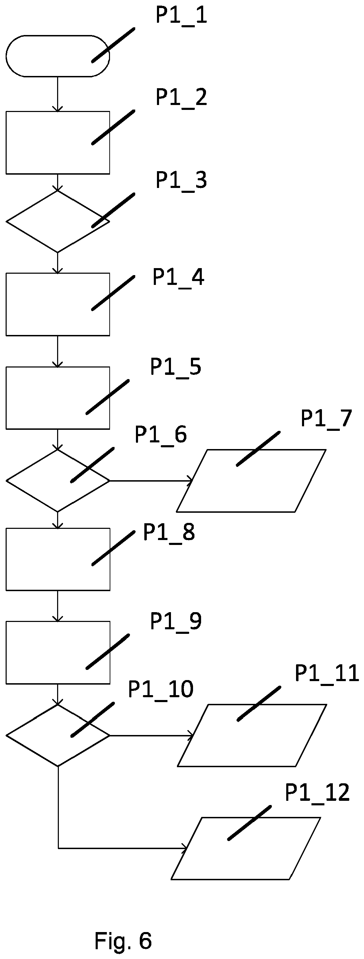

Noch bevor die Ölpumpe 23 und somit der Ölkühlkreis 5 in Betrieb genommen bzw. aktiviert wird - d.h. noch vor Einleitung der Druckaufbauphase (Phase I) -, wird vorgeschlagen, auf einen elektrischen Fehler des Überwachungssystems (bzw. Sensorfehler), d.h. z.B. auf einen Kurzschluss oder Kabelbruch zu überprüfen (vgl. dazu die Schritte P1_1 bis P1_7 in Fig. 6).

Dazu lässt man ab dem Zeitpunkt der Einleitung dieser Überprüfung (vgl. Schritt P1_1, Fig. 6) eine Mindestzeit bzw. Entprellzeit verstreichen (vgl. Schritt P1_2, Fig. 6), um sicherzustellen, dass der Ölkühlkreis 5 stillsteht und der Druck innerhalb des Ölkühlkreises 5 abgebaut ist. Im Schritt P1_3 wird diese Bedingung überprüft.

Danach werden die Signale der Drucksensoren 21, 22 zu mindestens einem Zeitpunkt diskret erfasst und für diesen Zeitpunkt ein Druckdifferenzwert ermittelt (vgl. Schritt P1_4, Fig. 6). Dieser Druckdifferenzwert wird dann im Schritt P1_5 mit einem vorgebbaren, ersten Druck-Vergleichswert SW1 verglichen. Überschreitet der Druckdifferenzwert den Druck-Schwellwert SW1 in Schritt P1_6, so wird auf einen solchen elektrischen Fehler des Überwachungssystems (bzw. Sensorfehler) erkannt (vgl. Schritt P1_7, Fig. 6). Andernfalls liegt ein fehlerfreies Überwachungssystem vor.

In Schritt P1_8 wird die Ölpumpe 23 und somit der Ölkühlkreis 5 in Betrieb genommen bzw. aktiviert, wodurch die Druckaufbauphase (Phase I) eingeleitet wird. Dabei werden die Signale der Drucksensoren 21, 22 zu mindestens einem Druckhub der Ölpumpe 23 - bei der es sich um eine Verdränger-Pumpe handelt - diskret erfasst (vgl. Schritt P1_8, Fig. 6). Ein solcher Druckhub während der Druckaufbauphase (Phase I) ist in Fig. 5 eindeutig zu erkennen. Alsdann wird zumindest ein Druck-Differenzwert ermittelt (vgl. Schritt P1_8, Fig. 6) und der Druck-Differenzwert dann mit einem vorgebbaren, zweiten Druck-Vergleichswert SW2 (phasenbezogener Vergleichswert für die Druck-Differenz) verglichen (vgl. Schritt P1_9, Fig. 6). Zusätzlich dazu kann auch die Zeit bis zum Erreichen des Druckhubs mit einem vorgebbaren Zeit-Vergleichswert verglichen werden.

Für den Fall, dass der ermittelte Druckdifferenzwert einerseits sowie ggf. auch der ermittelte Zeitwert andererseits den jeweils zugeordneten Vergleichswert überschreiten (vgl. Schritt P1_10, Fig. 6), wird auf einen solchen Fehler in der Druckaufbauphase (Phase I) erkannt (vgl. Fehlerausgabe in Schritt P1_11, Fig. 6). Andernfalls liegt eine fehlerfreie Druckaufbauphase (Phase I) vor (vgl. Schritt P1_12, Fig. 6).

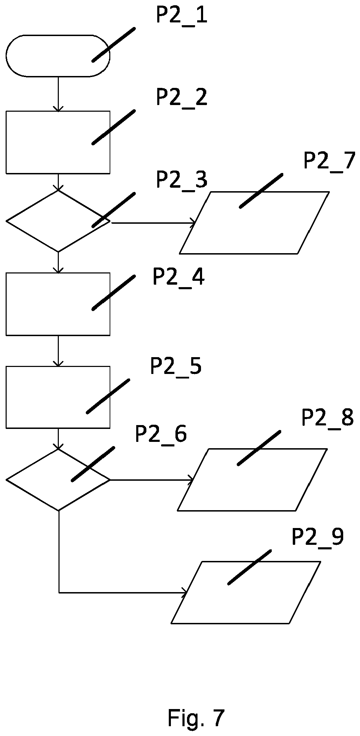

Nach einer Einleitung der Betriebsphase (Phase II; vgl. Schritt P2_1, Fig. 7), die auf die Druckaufbauphase (Phase I) folgt, werden die Signale der Drucksensoren 21, 22 erneut diskret, d.h. zu mindestens einem Zeitpunkt erfasst und für diesen Zeitpunkt ein Druckdifferenzwert aus den beiden Sensorsignalen ermittelt (vgl. Schritt P2_2, Fig. 7). Dieser Druckdifferenzwert wird dann mit einem vorgebbaren, dritten Druck-Vergleichswert SW3 (phasenbezogener Vergleichswert für die Druck-Differenz) verglichen (vgl. auch Schritt P2_2, Fig. 7), um auf einen elektrischen Fehler des Überwachungssystems (bzw. Sensorfehler) zu überprüfen. Überschreit der ermittelte Druckdifferenzwert den Druck-Vergleichswert SW3 (vgl. Schritt P2_3, Fig. 7), so wird auf einen solchen elektrischen Fehler des Überwachungssystems (bzw. Sensorfehler) erkannt (vgl. Schritt P2_7, Fig. 7).

Im Anschluss daran wird aus den diskret erfassten Signalen der beiden Drucksensoren 21, 22 ein Mittelwert gebildet (vgl. Schritt P2_4, Fig. 7) und dieser Mittelwert bzw. Druckmittelwert dann mit einem vorgebbaren, vierten Druck-Vergleichswert (phasenbezogener Vergleichswert für die Druck-Differenz) verglichen (vgl. Schritt P2_5, Fig. 7), um auf einen Fehler in der Betriebsphase (Phase II) zu überprüfen. Überschreitet dieser Druckmittelwert in Schritt P2_6 den Vergleichswert, so wird auf einen solchen Fehler in der Betriebsphase (Phase II) erkannt (vgl. Schritt P2_8, Fig. 7). Andernfalls liegt eine fehlerfreie Betriebsphase (Phase II) vor (vgl. Schritt P2_9, Fig. 7).

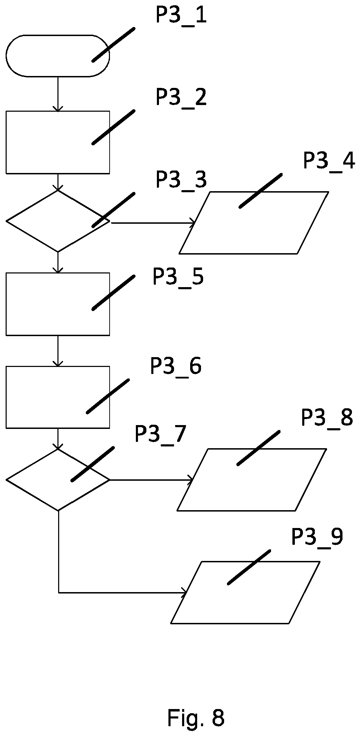

Nach einer Deaktivierung bzw. Außerbetriebnahme der Ölpumpe 23 (vgl. Schritt P3_1, Fig. 8), mit welcher die Druckabbauphase (Phase III) eingeleitet wird, werden die Signale der Drucksensoren 21, 22 zu mindestens einem Zeitpunkt erneut diskret erfasst (vgl. Schritt P3_2, Fig. 8). Alsdann wird für diesen Zeitpunkt ein Druck-Differenzwert ermittelt und dieser Druck-Differenzwert dann mit einem vorgebbaren, fünften Druck-Vergleichswert SW5 (phasenbezogener Vergleichswert für die Druck-Differenz) verglichen (vgl. auch Schritt P3_2, Fig. 8), um auf einen elektrischen Fehler des Überwachungssystems (bzw. Sensorfehler) zu überprüfen. Überschreitet dieser Druck-Differenzwert in Schritt P3_3 den Druck-Vergleichswert, wird auf einen solchen elektrischen Fehler des Überwachungssystems (bzw. Sensorfehler) erkannt (vgl. Schritt P3_4, Fig. 8). Andernfalls liegt ein fehlerfreies Überwachungssystem vor.

Danach wird ein Druckabfall überwacht, indem nach einer vorgebbaren Zeit bzw. Entprellzeit (vgl. Schritt P3_5, Fig. 8) bezüglich der Einleitung der Druckabbauphase (Phase III) die beiden diskret erfassten Drücke bzw. Drucksensorwerte mit einem vorgebbaren, auf die Entprellzeit bezogenen Zielwert (sechster Druck-Vergleichswert SW6; phasenbezogener Vergleichswert für die Druck-Differenz) verglichen werden, um auf einen Fehler in der Druckabbauphase (Phase III) zu überprüfen. Wird dieser Zielwert überschritten (vgl. Schritt P3_7, Fig. 8), wird auf einen solchen Fehler in der Druckabbauphase (Phase III) erkannt (vgl. Schritt P3_8,

Fig. 8). Andernfalls liegt eine fehlerfreie Druckabbauphase (Phase III) vor (vgl. Schritt P3_9, Fig. 8).

In Bezug auf die einzelnen Phasen I, II, III wird vorgeschlagen, die Drucksensorwerte z.B. alle 10 bis 100ms zu erfassen. Die zuvor genannten phasenbezogenen Vergleichswerte können dabei phasenbezogen variieren, d.h. phasenspezifisch sein.

Obwohl in der vorhergehenden Beschreibung exemplarische Ausführungen erläutert werden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Thermomanagementsystem für ein Fahrzeug, wobei das Thermomanagementsystem (1) einen ersten Kühlmittelkreis (2) für eine Batterie (7) und einen zweiten Kühlmittelkreis (3) für einen E-Motor (13) zum Antrieb des Fahrzeugs umfasst, wobei die beiden Kühlmittelkreise (2, 3) mittels eines Mehrwegeventils (9) in einem ersten Modus des Systems (1) und in einer ersten Ventilstellung des Mehrwegeventils (9) in Reihe zueinander oder in einem zweiten Modus des Systems (1) und in einer zweiten Ventilstellung des Mehrwegeventils (9) parallel zueinander betreibbar sind,
wobei das Thermomanagementsystem (1) ferner einen Ölkühlkreis (5) zur zusätzlichen Kühlung des E-Motors (13) umfasst, wobei der Ölkühlkreis (5) über einen Wärmetauscher (20) an den zweiten Kühlmittelkreis (3) thermisch angebunden ist, **dadurch gekennzeichnet, dass** die beiden Kühlmittelkreise (2, 3) alternativ auch in einem dritten Modus des Systems (1) und in einer dritten Ventilstellung des Mehrwegeventils (9) betreibbar sind, in welcher das Mehrwegeventil (9) eine Zwischenstellung einnimmt, in welcher sich die Kühlflüssigkeitsströme der beiden Kühlmittelkreise (2, 3) miteinander bedarfsgerecht vermischen.

2. Thermomanagementsystem nach Anspruch 1, wobei der Wärmetauscher (20) fluidisch parallel zum kühlflüssigkeitsgekühlten Stator (13^{I}) des E-Motors (13) angeordnet ist.

3. Thermomanagementsystem nach Anspruch 2, wobei eine erste Zuleitung (18) von einem Knotenpunkt des zweiten Kühlmittelkreises (3) stromaufwärts des Stators (13^{l}) zum Wärmetauscher (20) führt und eine zweite Zuleitung (19) vom Wärmetauscher (20) zu einem Knotenpunkt (18) des zweiten Kühlmittelkreises (3) stromabwärts des Stators (13^{I}).

4. Thermomanagementsystem nach einem der vorhergehenden Ansprüche, wobei der Ölkühlkreis (5) ein Überwachungssystem mit mindestens einem Drucksensor (21) zur Überwachung eines mittels einer Ölpumpe (23) erzeugten Ölflusses aufweist.

5. Thermomanagementsystem nach Anspruch 4, wobei das Überwachungssystem ferner einen Drehzahlsensor (22^{I}) aufweist, welcher an der Ölpumpe (23) angeordnet ist.

6. Thermomanagementsystem nach Anspruch 4 oder 5, wobei das Überwachungssystem ferner einen zusätzlichen Drucksensor (22) aufweist.

7. Thermomanagementsystem nach einem der Ansprüche 4 bis 6, wobei der mindestens eine Drucksensor (21), vorzugsweise beide Drucksensoren (21, 22) stromaufwärts des Wärmetauschers (20) und stromabwärts der Ölpumpe 23 angeordnet ist/sind.

8. Fahrzeug mit einem Thermomanagementsystem (1) nach einem der Ansprüche 1 bis 7.

## Claims

1. Thermal management system for a vehicle, wherein the thermal management system (1) comprises a first coolant circuit (2) for a battery (7) and a second coolant circuit (3) for an electric motor (13) for driving the vehicle, wherein the two coolant circuits (2, 3) can be operated by means of a multi-way valve (9) in series with one another in a first mode of the system (1) and in a first valve position of the multi-way valve (9) or in parallel with one another in a second mode of the system (1) and in a second valve position of the multi-way valve (9), wherein the thermal management system (1) further comprises an oil cooling circuit (5) for additionally cooling the electric motor (13), wherein the oil cooling circuit (5) is thermally connected to the second coolant circuit (3) via a heat exchanger (20), **characterized in that** the two coolant circuits (2, 3) can alternatively also be operated in a third mode of the system (1) and in a third valve position of the multi-way valve (9), in which the multi-way valve (9) takes up an intermediate position in which the coolant flows of the two coolant circuits (2, 3) are mixed with each other as needed.

2. Thermal management system according to Claim 1, wherein the heat exchanger (20) is arranged fluidically in parallel with the coolant-cooled stator (13^{I}) of the electric motor (13).

3. Thermal management system according to Claim 2, wherein a first feed line (18) leads from a junction of the second coolant circuit (3) upstream of the stator (13^{I}) to the heat exchanger (20) and a second feed line (19) leads from the heat exchanger (20) to a junction (18) of the second coolant circuit (3) downstream of the stator (13^{I}).

4. Thermal management system according to any one of the preceding claims, wherein the oil cooling circuit (5) has a monitoring system having at least one pressure sensor (21) for monitoring an oil flow which is generated by means of an oil pump (23).

5. Thermal management system according to Claim 4, wherein the monitoring system furthermore has a speed sensor (22^{I}) which is arranged on the oil pump (23).

6. Thermal management system according to Claim 4 or 5, wherein the monitoring system furthermore has an additional pressure sensor (22).

7. Thermal management system according to one of Claims 4 to 6, wherein the at least one pressure sensor (21), preferably both pressure sensors (21, 22), is/are arranged upstream of the heat exchanger (20) and downstream of the oil pump (23).

8. Vehicle with a thermal management system (1) according to one of Claims 1 to 7.

## Revendications

1. Système de gestion thermique pour un véhicule, le système de gestion thermique (1) comportant un premier circuit de fluide de refroidissement (2) pour une batterie (7) et un deuxième circuit de fluide de refroidissement (3) pour un moteur électrique (13) destiné à propulser le véhicule, les deux circuits de fluide de refroidissement (2, 3) pouvant fonctionner en série l'un avec l'autre au moyen d'une vanne à voies multiples (9) dans un premier mode du système (1) et dans une première position de la vanne à voies multiples (9) ou en parallèle l'un avec l'autre dans un deuxième mode du système (1) et dans une deuxième position de la vanne à voies multiples (9),
le système de gestion thermique (1) comportant en outre un circuit de refroidissement à huile (5) pour un refroidissement supplémentaire du moteur électrique (13), le circuit de refroidissement à huile (5) étant relié thermiquement au deuxième circuit de fluide de refroidissement (3) par le biais d'un échangeur de chaleur (20), **caractérisé en ce que** les deux circuits de fluide de refroidissement (2, 3) peuvent, en variante, également fonctionner dans un troisième mode du système (1) et dans une troisième position de vanne de la vanne à voies multiples (9), dans laquelle la vanne à voies multiples (9) adopte une position intermédiaire dans laquelle les flux de liquide de refroidissement des deux circuits de fluide de refroidissement (2, 3) se mélangent entre eux en fonction des besoins.

2. Système de gestion thermique selon la revendication 1, l'échangeur de chaleur (20) étant disposé fluidiquement en parallèle avec le stator (13^{I}) du moteur électrique (13) refroidi par un liquide de refroidissement.

3. Système de gestion thermique selon la revendication 2, une première conduite d'arrivée (18) menant d'un point nodal du deuxième circuit de fluide de refroidissement (3) en amont du stator (13^{I}) à l'échangeur de chaleur (20) et une deuxième conduite d'arrivée (19) menant de l'échangeur de chaleur (20) à un point nodal (18) du deuxième circuit de fluide de refroidissement (3) en aval du stator (13^{I}).

4. Système de gestion thermique selon l'une des revendications précédentes, le circuit de refroidissement à huile (5) possédant un système de surveillance comprenant au moins un capteur de pression (21) destiné à surveiller un flux d'huile généré au moyen d'une pompe à huile (23).

5. Système de gestion thermique selon la revendication 4, le système de surveillance possédant en outre un capteur de vitesse de rotation (22^{I}) qui est disposé au niveau de la pompe à huile (23).

6. Système de gestion thermique selon la revendication 4 ou 5, le système de surveillance possédant en outre un capteur de pression supplémentaire (22).

7. Système de gestion thermique selon l'une des revendications 4 à 6, l'au moins un capteur de pression (21), de préférence les deux capteurs de pression (21, 22), étant disposé(s) en amont de l'échangeur de chaleur (20) et en aval de la pompe à huile 23.

8. Véhicule comprenant un système de gestion thermique (1) selon l'une des revendications 1 à 7.
